Europäisches Patentamt

European Patent Office

Office européen des brevets

(11) Veröffentlichungsnummer: **0 373 479**

**A2**

(12) **EUROPÄISCHE PATENTANMELDUNG**

(21) Anmeldenummer: **89122364.6**

(22) Anmeldetag: **05.12.89**

(51) Int. Cl.⁵: **H02G 1/08, G02B 6/44**

(30) Priorität: **14.12.88 DE 3842122**

(43) Veröffentlichungstag der Anmeldung:
**20.06.90 Patentblatt 90/25**

(84) Benannte Vertragsstaaten:
**DE GB GR IT**

(71) Anmelder: **Siemens Aktiengesellschaft**
**Wittelsbacherplatz 2**
**D-8000 München 2(DE)**

(72) Erfinder: **Kunze, Dieter, Dipl.-Ing.**
**Rosenstrasse 10**
**D-8027 Neuried(DE)**
Erfinder: **Giebel, Wolfgang, Dipl.-Ing.**
**Zeppelinstrasse 5**
**D-8033 Planegg(DE)**

(54) **Verfahren zum Einbringen eines seil- oder kabelartigen Elements in ein Rohr und hierfür geeignete Elemente.**

(57) Bei der Erfindung handelt es sich um ein Verfahren zum Einbringen eines seil- oder kabelartigen Elementes (2, 9, 11, 12, 13, 14, 15, 16, 17, 18) in ein Rohr (1) mit Hilfe eines strömenden Mediums (4). Zur Erzeugung von Strömungsturbulenzen im Medium (4) werden an dem jeweils einzubringenden langgestreckten Element (2, 9,11, 12, 13, 14, 15, 16, 17, 18) Profilierungen (3, 9a, 11a, 12a, 13a, 14a, 15a, 16a, 17a, 20, 21) angeordnet. Die Erfindung betrifft weiterhin langgestreckte Elemente zur Durchführugn des Verfahrens.

**FIG 1**

# Verfahren zum Einbringen eines seil- oder kabelartigen Elementes in ein Rohr und hierfür geeignete Elemente.

Die Erfindung betrifft ein Verfahren zum Einbringen eines seil-oder kabelartigen Elementes in ein Rohr mit Hilfe eines strömenden Mediums.

Bei der Unterwasserverlegung von Kabeln ist beispielsweise aus der europäischen Patentanmeldung 0 264 767 bekannt, daß ein einzuführendes Kabel mit Hilfe von strömendem Wasser in einen Rohrzug eingespült werden kann. Hierzu werden auf das einzubringende Kabel in Abständen voneinander Führungs- oder Abstandselemente befestigt, die etwas kleiner im Durchmesser sind als die lichte Weite des Rohrzuges. Diese Führungs- bzw. Abstandselemente werden erst während des Verlegevorgangs am Kabel befestigt, was zur Folge hat, daß besondere Einrichtungen am Einlaufbeginn vorzusehen sind. Dies erfordert zusätzlichen Aufwand und zusätzliche Montagearbeit.

So ergibt sich für vorliegende Erfindung die Aufgabe, ein Verfahren zu entwickeln, mit dem die Einführung des einzubringenden Elementes in das Rohr bzw. den Rohrzug vereinfacht werden kann. Weiterhin ist Aufgabe, das einzubringende Element so auszubilden, daß sich ohne weitere Hilfsmittel ein ungehinderter Transport über lange Strecken hinweg durchführen läßt. Die erste Aufgabe wird nun mit Hilfe eines Verfahrens der eingangs erläuterten Art dadurch gelöst, daß das einzubringende Element und das strömende Medium so aufeinander abgestimmt werden, daß das Element im strömenden Medium zumindest nahezu schwebt und daß durch fest angeformte Profilierungen in der Umhüllung des einzubringenden Elementes Strömungsturbulenzen im Medium erzeugt werden. Die zweite Aufgabe wird mit Hilfe eines langgestreckten Elementes zur Durchführung des vorgenannten Verfahrens dadurch gelöst, daß an der Außenseite der Umhüllung des langgestreckten Elementes Profilierungen angeordnet sind.

Die Vorteile der Erfindung lassen sich nun in vielfältiger Weise realisieren, wobei das Verfahren wie auch die Ausführungsformen für die langgestreckten Elemente bei der Verlegung von Lichtwellenleiterkabeln in der Nachrichtentechnik besondere Bedeutung erlangen. So werden bei Unterwasserstrecken aus Sicherheitsgründen die Kabel in Rohrzüge unter Grund verlegt und hier werden der üblichen Legetechnik Grenzen gesetzt, da unvermeidbare Krümmungen des Rohres zu exponentiell ansteigenden Reibungen führen.

So ist Ziel der Erfindung, daß langgestreckte Elemente, vorzugsweise Kabel der Lichtwellenleitertechnik, mit Hilfe von Flüssigkeiten in den Rohrzug eingespült werden, wobei gemäß der Erfindung in der Strömung Turbulenzen erzeugt werden, die dazu führen, daß das einzubringende Element über weite Strecken hinweg im Rohrzug weitergetragen wird. Für diesen Zweck wird zunächst dafür gesorgt, daß das einzubringende Element und das strömende Medium so aufeinander abgestimmt werden, daß das einzubringende Element zumindest nahezu im strömenden Medium schwebt. Somit kann man rechnen, daß das Kabel bei strömendem Medium ein Stück in den Rohrzug hineingetragen wird. Zur Unterstützung des Vorganges kann das langgestreckte Element auch noch zusätzlich geschoben werden. Durch Krümmungen des Rohres und des einzubringenden Elementes, sowie durch die Eigensteifigkeit des einzubringenden Elementes ergeben sich Reibungskräfte, die dem Hineintragen des einzubringenden Elementes entgegenstehen. Diese Kräfte werden einerseits durch die hohe Flexibilität der einzubringenden Elemente, insbesondere von Lichtwellenleiterkabeln, bereits sehr niedrig gehalten; doch werden zusätzlich reibungsmindernde Materialkombinationen zwischen dem einzubringenden Element und dem Rohr angestrebt. Dies erfolgt zum Teil durch möglichst gerade Rohre und durch die Bemühung möglichst vorkrümmungsfreie Elemente zu verwenden. Diese praktischen Gegebenheiten werden jedoch auch bei Beachtung all dieser Punkte relativ geringe Grenzen für die Einbringlänge setzen. Da jedoch besonders bei den über weite Strecken hinweg verstärkungslosen Lichtwellenleiterkabeln eine möglichst große Einbringlänge, die weit über 10 km betragen kann, erwünscht ist, sind zusätzliche Mittel nötig, die der Erfindung zugrunde liegen. So werden beim Einströmen des Mediums hohe Strömungsgeschwindigkeiten angewendet, die am einzuführenden Element Turbulenzen verursachen und damit dieses "aufwirbelt" und in Schwingungen oder Wellenbewegungen durch das Rohr hindurchträgt. Der Erzeugung derartiger hoher Strömungsgeschwindigkeiten sind jedoch bei der gegebenen Rohrlänge, den technisch vernünftigen Durchmessern und der Viskosität des Mediums ebenfalls Grenzen gesetzt, da auch dann wenn das im Querschnitt runde einzuführende Element schräg zur Rohrachse liegt, die Strömung im wesentlichen laminar bleibt und das einzubringende Kabel dadurch nicht weggetragen werden kann. So liegt der Erfindung weiterhin zugrunde, in der Umhüllung des einzubringenden Elementes Profilierungen so zu gestalten, daß im strömenden Medium Turbulenzen eingeleitet werden.

Die Erfindung wird im folgenden anhand von dreizehn Figuren näher erläutert.

Figur 1 verdeutlicht das Prinzip des Verfahrens zum Einbringen eines langgestreckten Elementes in einen Rohrzug.

Figur 2 zeigt die Strömung bei Verwendung eines herkömmlichen Elementes.

Figur 3 zeigt die Strömung bei Verwendung eines Elementes gemäß der Erfindung.

Figur 4, 5, 6, 7 zeigt jeweils ein einzubringendes Element mit nahezu kreisrundem Grundquerschnitt.

Figur 8, 9, 10, 11 zeigt jeweils einen annähernd länglichen Querschnitt eines einzubringenden Elementes.

Figur 12 zeigt ein Ausführungsbeispiel, bei dem die Profilierung mit Hilfe von langgestreckten Bändern erreicht wird.

Figur 13 zeigt ein Ausführungsbeispiel für ein einzubringendes Element, bei dem als Profilierung ein seilartiges Element wendelförmig auf die Umhüllung aufgebracht ist.

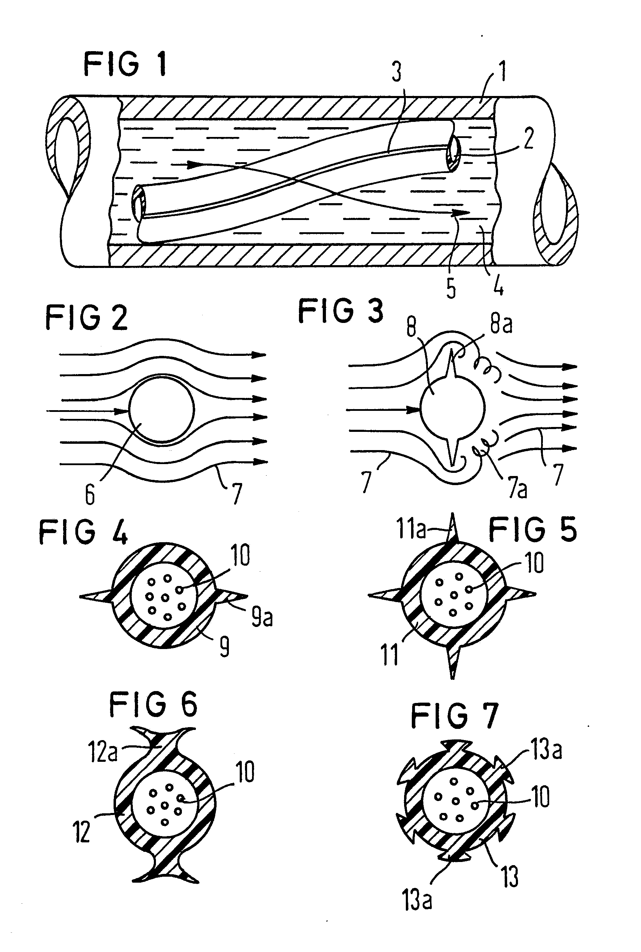

In Figur 1 wird das der Erfindung zugrunde liegende Problem verdeutlicht, in dem ersichtlich wird, daß ein in ein Rohr einzubringendes, langgestrecktes Element, hier zum Beispiel ein Lichtwellenleiterkabel 2, mit Hilfe eines strömenden Mediums 4, zum Beispiel Wasser, fortbewegt wird. Die Strömungsrichtung des Mediums 4 wird durch die Pfeile 5 angegeben, wobei damit auch angedeutet wird, daß das Medium 4 am einzubringenden Element, dem Lichtwellenleiterkabel 2, vorbeiströmen kann. An diesem Lichtwellenleiterkabel 2 ist nun zur Erzeugung von Strömungsturbulenzen, die ein Aufschwingen und dadurch mitbedingtes Fortbewegen des Lichtwellenleiterkabels 2 bewirken, eine Profilierung 3 als längsverlaufender Wulst an der Umhüllung direkt angeformt. Eine ähnliche Wirkung würde auch beispielsweise durch eine entsprechend verlaufende nutförmige Profilierung eintreten. Eine weitere Möglichkeit ist, derartige Profilierungen wendelförmig auf der Außenseite der Umhüllung des einzubringenden Elementes anzuordnen. Weiterhin ist möglich, Profilierungen als flächenhafte Einzelprofilierungen im Abstand voneinander anzuordnen; denn auch bei einer solchen Ausführungsform werden entsprechende Turbulenzen an den jeweiligen Kanten entstehen. Bei den fortlaufenden Ausführungsformen ist die Abdichtung am Rohrzugsbeginn mit einfachen Mitteln ausführbar, während bei Ausführungsformen mit nicht kontinuierlichen Profilierungen am einzubringenden Element besondere Maßnahmen wie z.B. eine Schleuße am Eingang des Rohrzuges erforderlich sind. Eine weitere Möglichkeit besteht darin, das einzubringende Element so auszubilden, daß es rohrförmigen Querschnitt aufweist, so daß auch dieser innere Bereich vom strömenden Medium durchflossen werden kann. Eine solche Ausführungsform kann beispielsweise durch ein zum Rohr gebogenes Band gebildet werden; im konkreten Fall zum Beispiel ein zum Rohr gebogenes Bandkabel.

Durch die Form und durch das jeweils verwendete Material für die Umhüllung des einzubringenden Elementes kann eine entsprechende Anpassung bezüglich seines Gewichtes und seines Auftriebes so auf das strömende Medium angepaßt werden, daß es zumindest nahezu schwebt.

Das Verfahren gemäß der Erfindung läßt sich sowohl bei der Seeverlegung wie auch bei einer Landverlegung von Kabeln in Rohrzügen jeglicher Art anwenden. Aufgrund der gewählten Konfiguration ist auch möglich, daß nur ein Kabel oder auch mehrere Kabel in ein Rohr eingezogen werden können, wobei das in einem oder auch in mehreren Verfahrensschritten erfolgen kann. Ebenso ist möglich, das Verfahren auch für das Herausziehen von bereits eingeführten Elementen anzuwenden, da durch die vorhandenen und fest angebrachten Profilierungen alle Erfordernisse nach wie vor beibehalten sind.

Die Wirkungen für das Verfahren lassen sich noch zusätzlich verbessern, wenn reibungsmindernde, schmierende und damit das langgestreckte Element benetzende Flüssigkeiten, so zum Beispiel vorzugsweise Wasser mit Benetzungsmittelzusätzen wie Seife, Ölzusätzen oder mit Festkörperzusätzen wie Mikrokugeln, zum Einspülen verwendet werden. Dabei läßt sich auch jeweils die Dichte des strömenden Mediums an die Dichte des einzuführenden Elementes anpassen.

Bei den Verfahren gemäß der Erfindung kann das zum Bewegen des einzubringenden Elementes benutzte strömende Medium am Ende der Rohrstrecke wieder aufgefangen und für weitere Einsätze wieder verwendet werden. So könnte dieses Medium zum Beispiel auch durch Einströmen in umgekehrter Richtung zum Wiederausführen des bereits eingebrachten Elementes eingepumpt werden.

Als besonders einfach sind natürlich besonders in Längsrichtung gleichmäßig verlaufende Ausführungsformen von Profilierungen anzusehen, da sich dann die geringsten Probleme beim Einführen der Elemente in das Rohr und das unter Druck stehende Medium ergeben. Zusätzlich lassen sich derartige Elemente auch besonders einfach im Extrusionsverfahren an der Umhüllung der langgestreckten Elemente anbringen.

Die Figuren 2 und 3 dienen zur Erläuterung der Verhältnisse gemäß der Erfindung. So wird in Figur 2 verdeutlicht, daß bei der Umströmung eines glatten Körpers 6 von einem strömenden Medium, dessen Strömungslinien 7 dargestellt sind, beinahe ungehindert umströmt werden. In der Figur 3 hingegen wird skizzenhaft angedeutet, daß bei der Umströmung eines Körpers 8 mit seitlich angebrachten Profilierungen 8a Turbulenzen 7a in der durch die Pfeile 7 angedeuteten Strömung ausgebildet werden. Durch diese verwirbelten Turbulenzen 7a werden Querkräfte erzeugt, die Rellenbewegungen am Gegenstand 8 bewirken. Auf diese Weise wird die Fortbewegung des Gegenstandes 8 unterstützt, wie es dem Sinn der Erfindung entspricht.

Die Figur 4 zeigt, wie auch alle folgenden Querschnittsdarstellungen, jeweils die vereinfachte Form eines langgestreckten Elementes 9, das mit seitlichen Profilierungen 9a entweder fortlaufend oder auch örtlich begrenzt versehen ist. Die Darstellung deutet weiterhin an, daß im Inneren eines solchen langgestreckten Elementes, zum Beispiel einem Lichtwellenleiterkabel, Einzelelemente, zum Beispiel Lichtwellenleiter 10, enthalten sein können. Da es bei der äußeren Ausführung der Umhüllung der langgestreckten Elemente nicht auf den inneren Aufbau ankommt, wurde der Einfachheit wegen auf eine detaillierte Ausführung verzichtet.

Die Figur 5 zeigt ein zweites Ausführungsbeispiel eines langgestreckten Elementes 11 mit im Inneren angeordneten Elementen 10, bei dem beispielsweise vier Profilierungen 11a an der Außenseite der Umhüllung angeordnet sind. Auch hier läßt sich die Anord nung der Profilierungen entsprechend ausbilden, entweder längsverlaufend jeweils entlang einer Mantellinie oder auch wendelförmig. Es ist jedoch auch eine punktuelle Anordnung solcher Profilierungen möglich.

Die Figur 6 zeigt ein Ausführungsbeispiel, bei dem an der Umhüllung 12 des längsverlaufenden Elementes sich gegenüberliegende Ansätze 12a ausgebildet sind, wie es im Prinzip die Figur 4 bereits verdeutlicht hat. Hier sind jedoch zusätzlich an diesen Profilierungen 12a spezielle Ausformungen angebracht, die zu einer besonders starken Turbulenzbildung anregen können.

Der Querschnitt eines längs verlaufenden Elementes 13 nach Figur 7 ist mit mehreren, über den gesamten Umfang verteilten hinterschnittenen Wülsten 13a versehen, die ebenfalls eine heftige Turbulenzbildung im Strömungsfluß des tragenden Mediums anregen.

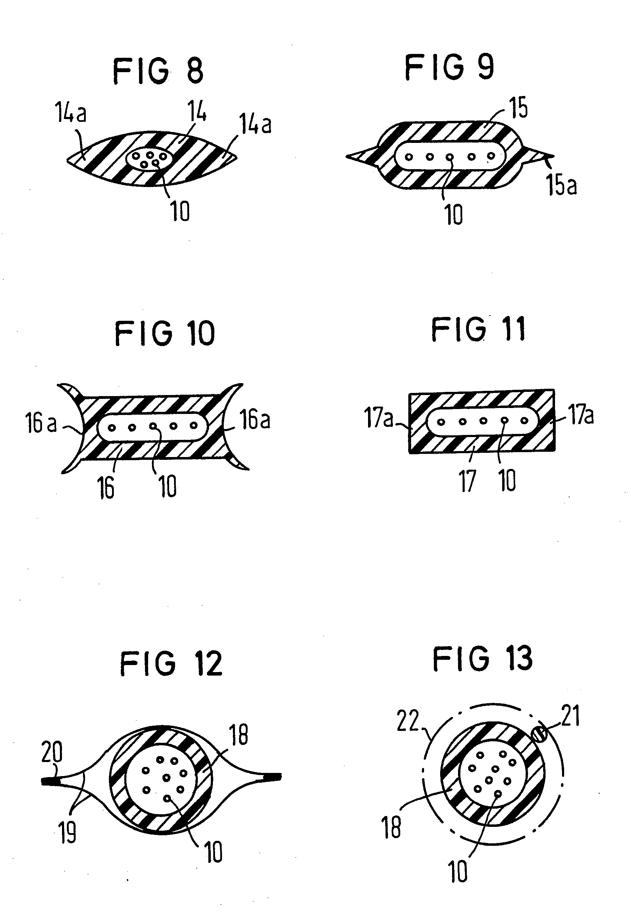

Die Figur 8 zeigt nun eine besondere Ausbildung bezüglich der Profilierungen, da hier die Umhüllung des langgestreckten Elementes 14 selbst seitlich zu angeformten Profilierungen 14a ausgezogen ist, so daß sich eine Art Bandkabel ergibt. Im Inneren des langgestreckten Elementes, zum Beispiel eines Lichtwellenleiterkabels sind Lichtwellenleiter 10 angedeutet. Bei der Ausbildung des langgestreckten Elementes 14 nach dieser Darstellung wird vorzugsweise eine wellenförmige Fortbewegung des langgestreckten Elementes bewirkt.

Die Figur 9 ist als Beispiel dafür anzusehen, daß ein in der Grundform als Bandkabel ausgebildetes langgestrecktes Element 15 zusätzlich mit seitlich angesetzten Profilierungen 15a, die in etwa den Profilierungen der Figur 4 entsprechen, versehen ist.

Die Figur 10 verbindet die Form eines Bandkabels 16 mit seitlich angesetzten Profilierungen 16a, wie sie in etwa der in Fi gur 6 gezeigten Ausführung entsprechen.

Figur 11 zeigt den Querschnitt durch ein rechteckig ausgebildetes Bandkabel 17, wobei die seitlichen Profilierungen 17a als kantig abgesetzte Seitenbegrenzungen anzusehen sind. Auch hier entstehen entsprechende Turbulenzen.

Die Figur 12 deutet an, daß ein langgestrecktes Element, zum Beispiel ein in normaler Rundform ausgebildetes Kabel 18 mit Profilierungen durch Aufbringen von längsverlaufenden und seitlich in einer Naht 20 zusammengeschweißten Bändern versehen werden kann. Die abstehenden Schweißnähte 20 bilden dann die Profilierungen, die wiederum die erforderlichen Turbulenzen bewirken.

Die Figur 13 zeigt ein weiteres Beispiel für das Aufbringen einer Profilierung am äußeren Umfang der Umhüllung eines langgestreckten Elementes 18, zum Beispiel einem normalen Rundkabel. Hierfür wird eine besondere Faser 21 verwendet, die entweder lose oder fest wendelförmig auf das langgestreckte Element 18 aufgebracht ist. Diese Ausführungsform läßt sich verhältnismäßig einfach durch Aufseilen dieser Faser 21 herstellen. Die strichpunktierte Begrenzung 22 soll andeuten, daß die Faser wendelförmig um das langgestreckte Element 18 herum verseilt ist.

All diese genannten Beispiele weisen entsprechende Profilierungen auf der Außenfläche des langgestreckten Elementes auf, wobei sich das Prinzip auch mit vielen anderen, hier nicht gezeigten Ausführungsformen, verwirklichen läßt.

**Ansprüche**

1. Verfahren zum Einbringen eines seil- oder kabelartigen Elementes in ein Rohr mit Hilfe eines strömenden Mediums,
**dadurch gekennzeichnet,**
daß das einzubringende Element (2, 9, 11, 12, 13, 14, 15, 16, 17, 18) und das strömende Medium (4) so aufeinander abgestimmt werden, daß das Element (2, 9, 11, 12, 13, 14, 15, 16, 17, 18) im strömenden Medium (4) zumindest nahezu schwebt und daß durch fest angeformte Profilierungen (3, 9a, 11a, 12a, 13a, 14a, 15a, 16a, 17a, 20, 21) in der Umhüllung des einzubringenden Elementes (2, 9, 11, 12, 13, 14, 15, 16, 17, 18) Strömungsturbulenzen im Medium (4) erzeugt werden.

2. Verfahren nach Anspruch 1,
**dadurch gekennzeichnet,**

daß ein Element (2, 9, 11, 12, 13, 14, 15, 16, 17, 18) eingeführt wird, das als Profilierung (3, 9a, 11a, 12a, 13a, 14a, 15a, 16a, 17a, 20, 21) mindestens eine kontinuierlich verlaufende Ausformung in der Umhüllung aufweist.

3. Verfahren nach Anspruch 1,
**dadurch gekennzeichnet,**
daß ein Element eingeführt wird, das in der Umhüllung als Profilierung in Abständen eingebrachte Vertiefungen aufweist.

4. Verfahren nach Anspruch 1,
**dadurch gekennzeichnet,**
daß ein Element eingeführt wird, das an der Umhüllung als Profilierung in Abständen angeformte flächenhaft begrenzte Erhebungen aufweist.

5. Verfahren nach Anspruch 1,
**dadurch gekennzeichnet,**
daß ein Element eingeführt wird, dessen Umhüllung rohrförmig ausgebidet ist, wobei auch im Inneren dieses geformten Rohres strömendes Medium (4) eingebracht wird.

6. Verfahren nach einem der vorhergehenden Ansprüche,
**dadurch gekennzeichnet,**
daß als strömendes Medium (4) eine reibungsmindernde, vorzugsweise eine das langgestreckte Element benetzende Flüssigkeit in das Rohr (1) eingeleitet wird.

7. Verfahren nach einem der vorhergehenden Ansprüche,
**dadurch gekennzeichnet,**
daß als strömendes Medium (4) Wasser mit Benetzungsmitteln, wie vorzugsweise Seife, verwendet wird.

8. Verfahren nach einem der Ansprüche 1 bis 6,
**dadurch gekennzeichnet,**
daß als strömendes Medium (4) Wasser mit Ölzusätzen in Form einer Emulsion verwendet wird.

9. Verfahren nach einem der vorhergehenden Ansprüche,
**dadurch gekennzeichnet,**
daß in das strömende Medium (4) Festkörperzusätze, vorzugsweise Mikrokugeln aus geeigneten Materialien, wie zum Beispiel Kunststoffe, eingebracht werden.

10. Verfahren nach einem der vorhergehenden Ansprüche,
**dadurch gekennzeichnet,**
daß ein einziges langgestrecktes Element eingebracht wird.

11. Verfahren nach einem der Ansprüche 1 bis 9,
**dadurch gekennzeichnet,**
daß mehrere langgestreckte Elemente einzeln nacheinander eingebracht werden.

12. Verfahren nach einem der Ansprüche 1 bis 9,
**dadurch gekennzeichnet,**
daß mehrere langgestreckte Elemente zugleich eingebracht werden.

13. Verfahren nach einem der Ansprüche 1 bis 9,
**dadurch gekennzeichnet,**
daß die bereits eingebrachten, langgestreckten Elemente auf entsprechende Weise einzeln oder gemeinsam durch das strömende Medium (4) aus dem Rohr (1) wieder herausgebracht werden.

14. Langgestrecktes Element, vorzugsweise Kabel, zum Einbringen in ein Rohr (1) zur Durchführung des Verfahrens nach einem der vorhergehenden Ansprüche,
**dadurch gekennzeichnet,**
daß an der Außenseite der Umhüllung des langgestreckten Elementes (2, 9, 11, 12, 13, 14, 15, 16, 17, 18) Profilierungen (3, 9a, 11a, 12a, 13a, 14a, 15a, 16a, 17a, 20, 21) angeordnet sind.

15. Langgestrecktes Element nach Anspruch 14,
**dadurch gekennzeichnet,**
daß die Profilierung (3, 9,a, 11a, 12a, 13a, 14a, 15a, 16a, 20, 21) kontinuierlich in Längsrichtung verlaufend, vorzugsweise als Stege, Wülste oder Nuten, angeordnet sind.

16. Langgestrecktes Element nach Anspruch 15,
**dadurch gekennzeichnet,**
daß die Profilierungen (9a, 1a, 12a, 13a, 21) wendelförmig verlaufend angeordnet sind.

17. Langgestrecktes Element nach Anspruch 14,
**dadurch gekennzeichnet,**
daß die Profilierungen als flächenhaft begrenzte Ausformungen ausgebildet sind.

18. Langgestrecktes Element nach Anspruch 14,
**dadurch gekennzeichnet,**
daß die Profilierungen als flächenhaft begrenzte Einkerbungen ausgebildet sind.

19. Langgestrecktes Element nach Anspruch 14,
**dadurch gekennzeichnet,**
daß die Profilierungen ringförmig ausgebildet sind.

20. Langgestrecktes Element nach Anspruch 14,
**dadurch gekennzeichnet,**
daß die Profilierungen (14a, 15a, 16a, 17a) als seitliche Verbreiterung der Umhüllung so ausgebildet sind, daß sich vorzugsweise flache bzw. ovale Querschnittsformen ergeben.

21. Langgestrecktes Element nach Anspruch 14,
**dadurch gekennzeichnet,**
daß die Profilierung (21) durch ein wendelförmig auf die Umhüllung des langgestreckten Elementes (18) aufgebrachtes, langgestrecktes Element, vorzugsweise eines schnurähnlichen Elementes, gebildet ist.

22. Langgestrecktes Element nach Anspruch 14,

**dadurch gekennzeichnet,**

daß die Profilierung (20) durch längsverlaufend auf die Umhüllung des langgestreckten Elementes (18) aufgebrachte Bänder (19) gebildet ist.

23. Langgestrecktes Element nach einem der Ansprüche 14 bis 22,

**dadurch gekennzeichnet,**

daß die Profilierungen (3, 9a, 11a, 12a, 13a, 14a, 15a, 16a, 17a, 20, 21) in der Stärke jeweils so ausgebildet sind, daß das strömende Medium (4) im Rohr (1) in Längsrichtung ohne Unterbrechung fließen kann.

FIG 1

FIG 2

FIG 3

FIG 4

FIG 5

FIG 6

FIG 7

FIG 8

FIG 9

FIG 10

FIG 11

FIG 12

FIG 13